# EUROPEAN PATENT APPLICATION

(11) **EP 4 374 999 A1**
(43) Date of publication of application: **29.05.2024**
(21) Application number: 21951054.2
(22) Date of filing: 21.12.2021
(51) Int. Cl.: B23K 3/08, B23K 1/00, B23K 37/00

(54) **COOLING MODULE AND BRAZING APPARATUS COMPRISING SAME**

(30) Priority: 23.07.2021 KR 20210097272
(71) Applicant: LS Electric Co., Ltd., Gyeonggi-do 14119 (KR)
(72) Inventor: KWON, Ki Jeong, Anyang-si, Gyeonggi-do 14118 (KR); PARK, Young Geun, Anyang-si, Gyeonggi-do 14118 (KR)
(74) Representative: K&L Gates LLP
(86) International application number: PCT/KR2021/019492
(87) International publication number: WO 2023/003106

(57) **Abstract**

**[Summary]**

A cooling module, according to an embodiment of the present invention, for cooling an object to be brazed comprises: a body part having a contact part in contact with the object to be brazed, and cooling the object to be brazed; a first nipple connected to one side of the body part, and having a first supply flow path for receiving fluid from the outside; and a second nipple connected to the other side of the body part, and having a first discharge flow path for discharging the fluid to the outside, wherein the body part includes: a second supply flow path formed inside the body part so as to be connected to the first supply flow path; a second discharge flow path formed inside the body part so as to be connected to the first discharge flow path; and a connection flow path positioned to be adj acent to the contact part of the body part, and connecting the second supply flow path and the second discharge flow path.

## Description

### [Technical Field]

The present invention relates to a cooling module and a brazing apparatus including the same, and more specifically, to a cooling module for cooling an brazing object, and a brazing apparatus including the same.

### [Background Art]

Brazing is one of the methods for bonding an object to a base metal, wherein instead of being bonded by melting the object or the base material, the object is bonded to the base material by supplying and melting a brazing filler metal, which melts at a temperature below the melting point of the object or the base material, between the object and the base metal.

Since such brazing bonds the object and the base material to each other without melting the object or the base material, the thermal effect on the object or the base material can be minimized and thus, the characteristics of the object or the base material can be maintained, so it is widely used.

Such brazing can increase the bonding strength while shortening the bonding time through a process of supplying and melting the brazing filler metal between the object and the base material and then cooling the object.

However, although there is a method of blowing cold wind as one of the conventional methods of cooling an object, this method has a problem that the manufacturing cost increases due to the prolonged cooling time despite energy consumption.

In addition, another conventional method of cooling an object is to conduct heat from the object to a cooling device, but this method has a problem in that the heat of the cooling device is not cooled quickly, resulting in poor cooling performance.

### [Disclosure]

### [Technical Problem]

The present invention is intended to solve the above problems and to provide a cooling module that reduces energy consumption by improving cooling performance, and a brazing apparatus including the same.

The objects of the present invention are not limited to the above-mentioned objects, and other objects not mentioned will be clearly understood by those skilled in the art from the following description.

### [Technical Solution]

In order to solve the above problems, according to an embodiment of the present invention, a cooling module for cooling an object to be brazed is provided, which may comprise: a body part having a contact part in contact with the object to be brazed and cooling the object to be brazed; a first nipple connected to one side of the body part and having a first supply flow path for receiving fluid from the outside; and a second nipple connected to the other side of the body part and having a first discharge flow path for discharging the fluid to the outside, wherein the body part includes: a second supply flow path formed inside the body part so as to be connected to the first supply flow path; a second discharge flow path formed inside the body part so as to be connected to the first discharge flow path; and a connection flow path positioned to be adjacent to the contact part of the body part and connecting the second supply flow path and the second discharge flow path.

Here, the connection flow path may include: a plurality of first connection flow paths formed in parallel and spaced apart from each other; and a plurality of second connection flow paths disposed between the plurality of first connection flow paths.

The lower sides of the plurality of first connection flow paths may be formed to become narrower as they go downward.

The plurality of second connection flow paths may be disposed between the lower sides of the plurality of first connection flow paths, the upper sides of the plurality of second connection flow paths may be formed to be spaced apart from the plurality of first connection flow paths at a certain interval, and the lower sides of the plurality of second connection flow paths may be formed to become farther away from the plurality of first connection flow paths as they go downward.

The cooling module may further include a moving part that is connected to the body part and moves the body part in a vertical direction.

Here, the body part may include: a first coupling part formed to protrude outward from the body part and provided with a first coupling hole; and a second coupling part formed to protrude outward from the body part, disposed on a side opposite to the first coupling part and provided with a second coupling hole, and wherein the moving part may include: a moving body part having a predetermined length along the vertical direction; a third coupling part protruding from the moving body part to correspond to the first coupling part and provided with a third coupling hole corresponding to the first coupling hole; a fourth coupling part protruding from the moving body part to correspond to the second coupling part, disposed on a side opposite to the third coupling part and provided with a fourth coupling hole corresponding to the second coupling hole; a first bolt inserted through the first coupling hole and the third coupling hole to be bolt-coupled thereto; and a second bolt inserted through the second coupling hole and the fourth coupling hole to be bolt-coupled thereto.

The moving part may further include: a first elastic part surrounding the outer surface of the first bolt and disposed between the first coupling part and the third coupling part; and a second elastic part surrounding the outer surface of the second bolt and disposed between the second coupling part and the fourth coupling part.

The first nipple may have an inner diameter of approximately 6 mm.

In this case, the flow rate of the fluid flowing through the first nipple may be approximately 5.6 LPM to 11 LPM.

In addition, a brazing apparatus according to an embodiment of the present invention may include: a first fixing part capable of contacting one side of a brazing object and provided with a first electrode; a second fixing part capable of contacting the other side of the brazing object and provided with a second electrode electrically connected to the first electrode through the brazing object; a cooling module for cooling the brazing object; a supply hose connected to one side of the cooling module and supplying fluid to the cooling module; and a discharge hose connected to the other side of the cooling module and discharging the fluid of the cooling module to the outside, wherein the cooling module may include: a body part having a contact part in contact with the brazing object; a first nipple connected to one side of the body part and provided with a first supply flow path connected to the supply hose to receive the fluid; and a second nipple connected to the other side of the body part and provided with a first discharge flow path connected to the discharge hose to discharge the fluid to the outside, wherein the body part includes: a second supply flow path formed inside the body part so as to be connected to the first supply flow path; a second discharge flow path formed inside the body part so as to be connected to the first discharge flow path; and a connection flow path positioned to be adjacent to the contact part of the body part and connecting the second supply flow path and the second discharge flow path.

### [Advantageous Effects]

In the cooling module according to an embodiment of the present invention, the contact part is quickly cooled by the fluid flowing through the connection flow path disposed adjacent to the contact part in contact with the brazing object, thereby improving the performance of cooling the brazing object.

In addition, a plurality of connection flow paths are provided to increase the area in contact with the contact part, thereby improving the performance of cooling the brazing object.

### [Description of Drawings]

FIG. 1 is a diagram showing a brazing apparatus according to an embodiment of the present invention.
FIG. 2 is a perspective view showing a cooling module according to an embodiment of the present invention.
FIG. 3 is an exploded perspective view showing a cooling module according to an embodiment of the present invention.
FIG. 4 is a perspective view showing a cross section along line A-A' shown in FIG. 3.
FIG. 5 is a cross-sectional view taken along line A-A' shown in FIG. 3.
FIG. 6 is a perspective view showing a cross section along line B-B' shown in FIG. 3.
FIG. 7 is a cross-sectional view taken along line B-B' shown in FIG. 3.
FIG. 8 is a perspective view partially showing an interior of a body part according to an embodiment of the present invention.
FIG. 9 is a perspective view partially showing an interior of a body part according to an embodiment of the present invention from another side.
FIG. 10 is a table showing temperature ranges of a cooling device according to an inner diameter of a first nipple, a flow rate of fluid, and a flow velocity of fluid.
FIG. 11(a) is a diagram showing a temperature range of a cooling device through simulation when an inner diameter of a first nipple is 2.07 mm, a fluid flow rate is 5.6 LPM, and a fluid flow velocity is 27.7 m/s.
FIG. 11(b) is a diagram showing a temperature range of a cooling device through simulation when an inner diameter of a first nipple is 2.07 mm, a fluid flow rate is 11 LPM, and a fluid flow velocity is 54.4 m/s.
FIG. 12(a) is a diagram showing a temperature range of a cooling device through simulation when an inner diameter of a first nipple is 4.8 mm, a fluid flow rate is 5.6 LPM, and a fluid flow velocity is 5.15 m/s.
FIG. 12(b) is a diagram showing a temperature range of a cooling device through simulation when an inner diameter of a first nipple is 4.8 mm, a fluid flow rate is 11 LPM, and a fluid flow velocity is 10.1 m/s.
FIG. 13(a) is a diagram showing a temperature range of a cooling device through simulation when an inner diameter of a first nipple is 6 mm, a fluid flow rate is 5.6 LPM, and a fluid flow velocity is 3.3 m/s.
FIG. 13(b) is a diagram showing a temperature range of a cooling device through simulation when an inner diameter of a first nipple is 6 mm, a fluid flow rate is 11 LPM, and a fluid flow velocity is 6.5 m/s.

100: cooling module
110: moving part
120: body part
121a: second supply flow path
121b: second discharge flow path
121c: connection flow path
127: contact part
130: fastening part
140: elastic part
150: first nipple
151: first supply flow path
160: second nipple
161: first discharge flow path

### [Detailed Description]

Hereinafter, various embodiments will be described in more detail with reference to the accompanying drawings. The embodiments according to the present invention may be modified in various ways. Specific embodiments may be depicted in the drawings and described in detail in the detailed description. However, the specific embodiments disclosed in the accompanying drawings are only intended to facilitate understanding of various embodiments. Accordingly, it should be understood that the technical idea is not limited by the specific embodiments disclosed in the accompanying drawings, and includes all equivalents or substitutes included in the spirit and technical scope of the invention.

Terms including an ordinal number, such as first, second, etc., may be used to describe various elements, but these elements are not limited by the terms. The above terms are used only for the purpose of distinguishing one component from another.

In the embodiments of the present invention, terms such as "comprise" or "have" are intended to designate that a feature, number, step, operation, component, part or combination thereof described in the embodiments of the present invention is present, but should not be construed to preclude the possibility of the presence or addition of one or more other features, numbers, steps, operations, components, parts or combinations thereof. When a component is referred to as being "connected" or "coupled" to another component, it should be understood that although they may be directly connected or coupled to each other, other components may exist in the middle. On the other hand, when a component is referred to as "directly connected" or "directly coupled" to another component, it should be understood that no other component exists in the middle.

Meanwhile, a "module" or "part" for a component used in an embodiment of the present invention performs at least one function or operation. In addition, the "module" or "part" may perform a function or operation by hardware, software, or a combination of hardware and software. Further, a plurality of "modules" or a plurality of "parts", excluding a "module" or "part" that must be performed on specific hardware or performed on at least one processor, may be integrated into at least one module. Singular expressions include plural expressions unless the context clearly implies otherwise.

Meanwhile, in the case of describing embodiments of the present invention, if it is determined that specific descriptions of related known functions or configurations may unnecessarily obscure the gist of the present invention, detailed descriptions thereof will be abbreviated or omitted.

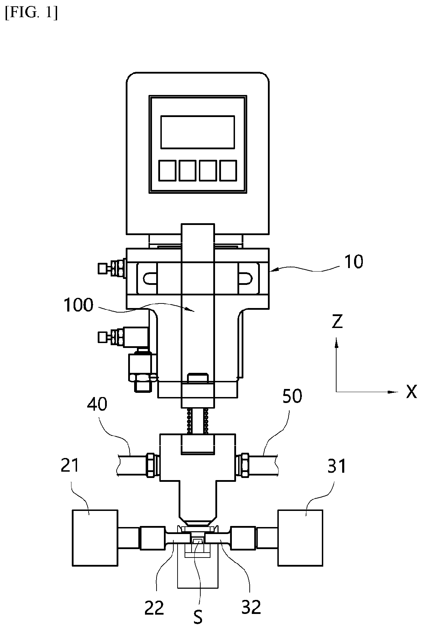

FIG. 1 is a diagram showing a brazing apparatus according to an embodiment of the present invention.

Referring to FIG. 1, the brazing apparatus 10 according to an embodiment of the present invention includes: a first fixing part 21 in contact with one side of a brazing object (S), a second fixing part 31 in contact with the other side of the brazing object (S), and a cooling module 100 for cooling the brazing object (S). Here, the brazing object means a base material, a brazing filler metal, such as lead, and an object that are sequentially stacked.

The first fixing part 21 is moved toward the brazing object (S) in the X-axis direction and comes into contact with one side of the brazing object (S). Here, the first fixing part 21 is provided with a first electrode 22 in contact with the brazing object (S).

The second fixing part 31 is moved toward the first fixing part 21 in the X-axis direction and comes into contact with the other side of the brazing object (S). That is, the brazing object (S) is fixed by the first fixing part 21 and the second fixing part 31. Here, the second fixing part 31 is provided with a second electrode 32 in contact with the brazing object (S). The second electrode 32 is electrically connected to the first electrode 22 through the brazing object (S). In addition, the brazing object (S) is heated by current flowing through the first electrode 22 and the second electrode 32 so that the base material and the object are bonded to each other.

The cooling module 100 is moved in the Z-axis direction and comes into contact with the brazing object (S). In this case, the heat of the brazing object (S) is conducted to the cooling module 100.

In addition, a fluid supply hose 40 is provided on one side of the cooling module 100. The cooling module 100 receives fluid through the fluid supply hose 40. The fluid receives heat from the cooling module 100.

In addition, a fluid discharge hose 50 is provided on the other side of the cooling module 100. The cooling module 100 discharges the fluid through the fluid discharge hose 50. That is, the fluid discharges heat from the cooling module 100 to the outside. The cooling module 100 will be described in detail below with reference to the drawings.

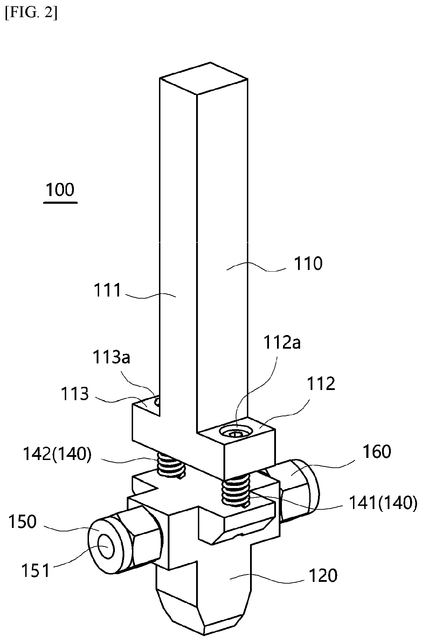

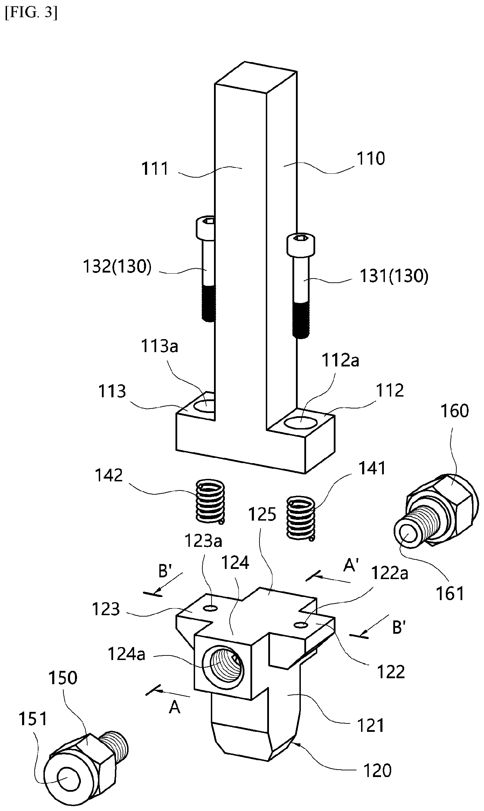

FIG. 2 is a perspective view showing a cooling module according to an embodiment of the present invention; and FIG. 3 is an exploded perspective view showing a cooling module according to an embodiment of the present invention.

Referring to FIGS. 2 and 3, the cooling module 100 according to an embodiment of the present invention includes: a body part 120, a first nipple 150, a second nipple 160, and a moving part 110.

The body part 120 is provided with a cooling part 121 inside which a passage, through which fluid flows, is formed. The cooling part 121 is made of a metal material. However, the cooling part 121 is not limited to the metal material, and may be made of various materials with good thermal conductivity, such as conductive plastic.

The first nipple 150 is connected to one side 124 of the cooling part 121. In this case, a screw thread is formed on one side of the first nipple 150, and another screw thread corresponding to the screw thread formed on one side of the first nipple 150 is formed inside one side 124 of the cooling part 121, whereby one side of the first nipple 150 is coupled to one side 124 of the cooling part 121 in a bolt coupling manner.

In addition, the first nipple 150 is provided with a first supply flow path 151 for receiving fluid from the outside. The fluid moves into the inside of the cooling part 121 through an internal passage 124a of one side of each of the first nipple 150 and the cooling part 121.

The second nipple 160 is connected to the other side 125 of the cooling part 121. In this case, a screw thread is formed on one side of the second nipple 160, and another screw thread corresponding to the screw thread formed on the other side of the second nipple 160 is formed inside the other side 125 of the cooling part 121, whereby one side of the second nipple 160 is coupled to the other side 125 of the cooling part 121 in a bolt coupling manner.

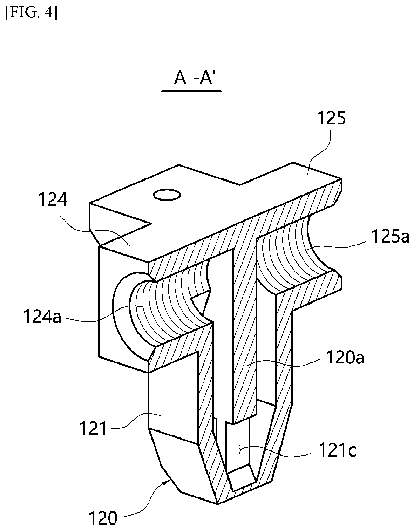

In addition, the second nipple 160 is provided with a first discharge flow path 161 for discharging the fluid of the cooling part 121 to the outside. The fluid moves to the outside of the cooling part 121 through the internal passage 125a (see FIG. 4) of the other side of the second nipple 160 and the cooling part 121.

The moving part 110 includes a moving body part 111, a third coupling part 112, a fourth coupling part 113, a fastening part 130, a first elastic part 141, and a second elastic part 142.

The moving body part 111 has a predetermined length along the vertical direction (Z-axis, see FIG. 1). The moving body part 111 is connected to the brazing apparatus 10 and moves in the vertical direction.

The material of the moving body part 111 has lower thermal conductivity than that of the cooling part 121. Accordingly, since the heat of the cooling part 121 is prevented from moving to the moving body part 111, the brazing apparatus 10 is prevented from being damaged by heat.

Meanwhile, the cooling part 121 includes a first coupling part 122 and a second coupling part 123.

The first coupling part 122 is formed to protrude outward from the cooling part 121 between one side 124 of the cooling part 121 and the other side 125 of the cooling part 121. The first coupling part 122 is provided with a first coupling hole 122a in which a screw thread is formed.

The second coupling part 123 is formed to protrude outward from the cooling part 121 between one side 124 of the cooling part 121 and the other side 125 of the cooling part 121, and is disposed on a side opposite to the first coupling part 122. The second coupling part 123 is provided with a second coupling hole 123a in which a screw thread is formed.

The third coupling part 112 is formed to protrude from the moving body part 111 in the horizontal direction (X-axis, see FIG. 1) to correspond to the first coupling part 122. The third coupling part 112 is provided with a third coupling hole 112a corresponding to the first coupling hole 122a.

The fourth coupling part 113 is formed to protrude in the horizontal direction (X-axis, see FIG. 1) from the moving body part 111 to correspond to the second coupling part 123, and is disposed on a side opposite to the third coupling part 112. The fourth coupling part 113 is provided with a fourth coupling hole 113a corresponding to the second coupling hole 123a.

The fastening part 130 includes a first bolt 131 and a second bolt 132.

The first bolt 131 is inserted through the first coupling hole 122a and the third coupling hole 112a to be bolt-coupled. The second bolt 132 is inserted through the second coupling hole 123a and the fourth coupling hole 113a to be bolt-coupled. Accordingly, as the fastening part 130 couples the moving body part 111 and the cooling part 121 to each other, the cooling part 121 is moved together with the moving body part 111 in the vertical direction to contact or leaves the brazing object (S, see FIG. 1).

The material of the first bolt 131 and the second bolt 132 has lower thermal conductivity than that of the cooling part 121, so that the heat of the cooling part 121 is prevented from being transmitted to the first bolt 131 and the second bolt 132.

According to various embodiments of the present invention, the fastening part 130 is not limited to the bolt structure, and may have various structures capable of coupling the cooling part 121 and the moving body part 111 to each other.

The first elastic part 141 surrounds the outer surface of the first bolt 131 and is disposed between the first coupling part 122 and the third coupling part 112. The first elastic part 141 is in the form of a spring. However, the first elastic part 141 is not limited to being in the form of a spring, and may be formed in various forms having elastic force between the first coupling part 122 and the third coupling part 112.

The second elastic part 142 surrounds the outer surface of the second bolt 132 and is disposed between the second coupling part 123 and the fourth coupling part 113. The second elastic part 142 is in the form of a spring. However, the second elastic part 142 is not limited to being in the form of a spring, and may be formed in various forms having elastic force between the second coupling part 123 and the fourth coupling part 113.

As such, the first elastic part 141 and the second elastic part 142 keep the cooling part 121 and the moving body part 111 spaced apart at a certain interval, thereby preventing the heat of the cooling part 121 from moving to the moving body part 111.

In addition, the first elastic part 141 and the second elastic part 142 alleviate an impact generated when the cooling part 121 and the moving body part 111 contact or leave the brazing object (S, see FIG. 1), thereby preventing the tightening of the first bolt 131 and the second bolt 132 from being released.

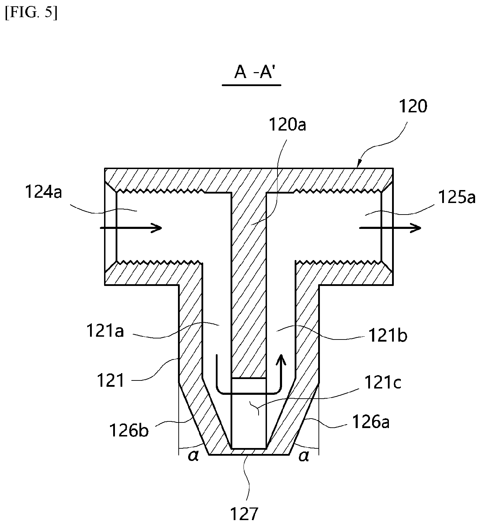

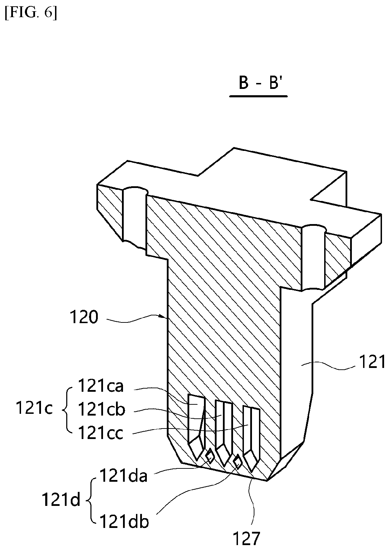

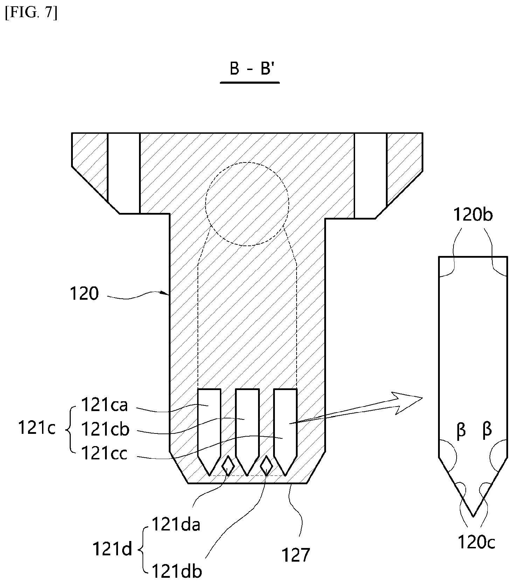

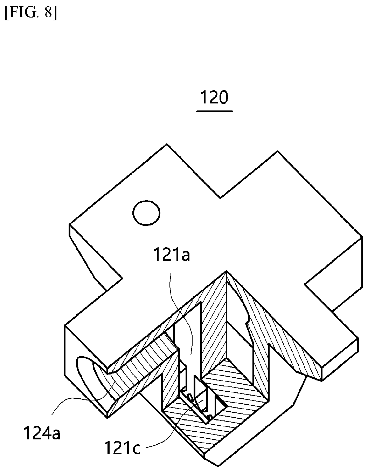

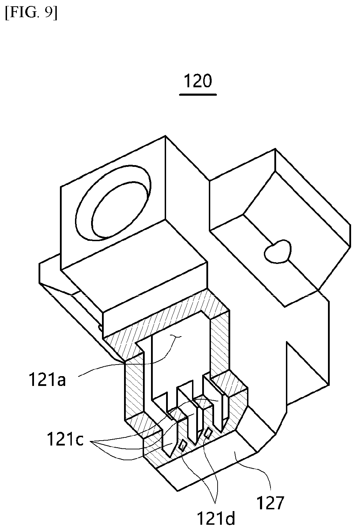

FIG. 4 is a perspective view showing a cross section along line A-A' shown in FIG. 3; FIG. 5 is a cross-sectional view taken along line A-A' shown in FIG. 3; FIG. 6 is a perspective view showing a cross section along line B-B' shown in FIG. 3; FIG. 7 is a cross-sectional view taken along line B-B' shown in FIG. 3; FIG. 8 is a perspective view partially showing an interior of a body part according to an embodiment of the present invention; and FIG. 9 is a perspective view partially showing an interior of a body part according to an embodiment of the present invention from another side.

Referring to FIGS. 4 to 9, the cooling part 121 is provided with a second supply flow path 121a, a second discharge flow path 121b, and a connection flow path 121c.

The second supply flow path 121a is formed inside the cooling part 121 to be connected to the first supply flow path 151 (see FIG. 2).

The second discharge flow path 121b is formed inside the cooling part 121 to be connected to the second discharge flow path 161 (see FIG. 2). Here, the cooling part 121 is provided with a partition member 120a that divides the second supply flow path 121a and the second discharge flow path 121b. The second discharge flow path 121b is formed symmetrically with the first supply flow path 121a with the partition member 120a interposed therebetween.

In addition, a contact part 127 that contacts the brazing object (S, see FIG. 1) is provided on the lower side of the cooling part 121.

The connection flow path 121c is located adjacent to the contact part 127 and connects the second supply flow path 121a and the second discharge flow path 121b to each other.

As shown in FIG. 5, the fluid supplied through the first coupling hole 124a receives heat from the cooling part 121 and discharges the heat to the outside by sequentially passing through the second supply flow path 121a, the connection flow path 121c, and the discharge flow path 121b.

The lower surfaces 126a and 126b of the cooling part 121 are formed so that the cross-sectional area thereof decreases as they go downward. For example, the lower surfaces 126a and 126b of the cooling part 121 are formed to be inclined at a predetermined angle (α) with the side surface of the cooling part 121. Accordingly, the heat of the contact part 127 moves smoothly upward along the lower surfaces 126a and 126b of the cooling part 121, thereby preventing the heat of the contact part 127 from being concentrated.

The connection flow path 121c includes a plurality of first connection flow paths 121ca, 121cb and 121cc, and a plurality of second connection flow paths 121d, as shown in FIGS. 6 and 7.

The plurality of first connection flow paths 121ca, 121cb, and 121cc are formed in parallel and spaced apart from each other. Accordingly, since an area of the plurality of first connection flow paths 121ca, 121cb, and 121cc in contact with the inside of the cooling part 121 increases, the heat of the cooling part 121 is smoothly transferred to the fluid.

In addition, the lower sides of the plurality of first connection flow paths 121ca, 121cb, and 121cc are formed to become narrower as they go downward. For example, the lower side 120c of the plurality of first connection flow paths 121ca, 121cb, and 121cc is formed to be inclined at a predetermined angle (β) with the inner surface 120b of the plurality of first connection flow paths 121ca, 121cb, and 121cc.

The plurality of second connection flow paths 121da and 121db are disposed between the lower sides of the plurality of first connection flow paths 121ca, 121cb and 121cc.

In this case, the upper sides of the plurality of second connection flow paths 121da and 121db are formed to be spaced apart from the plurality of first connection flow paths 121ca, 121cb and 121cc at a certain interval. The lower sides of the plurality of second connection flow paths 121da and 121db are formed to become farther away from the plurality of first connection flow paths 121ca, 121cb and 121cc as they go downward. For example, the cross-section of the plurality of second connection flow paths 121da and 121db has a diamond shape. However, the cross-section of the plurality of second connection flow paths 121da and 121db is not limited to having the diamond shape, and may be formed in various shapes to be disposed between the plurality of first connection flow paths 121ca, 121cb and 121cc.

Accordingly, since the plurality of second connection flow paths 121da and 121db are disposed between the plurality of first connection flow paths 121ca, 121cb and 121cc to increase the area in contact with the cooling part 121, the heat of the cooling part 121, especially the heat of the contact part 127 in contact with the brazing object (S), is smoothly transferred to the fluid.

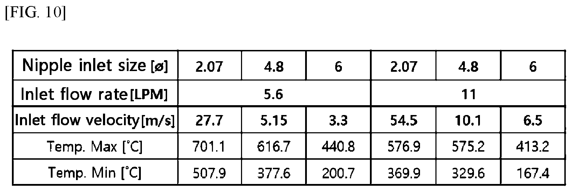

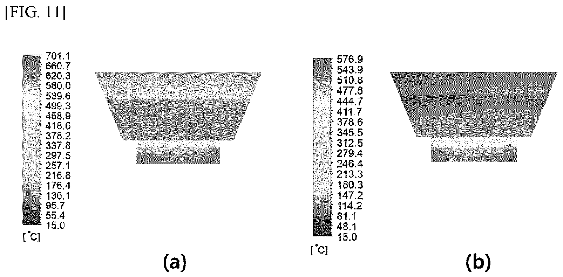

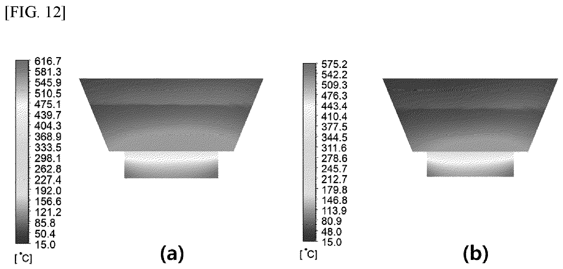

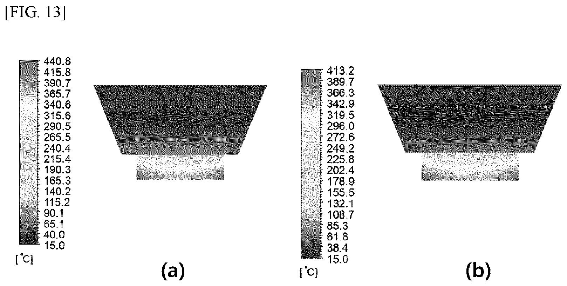

FIG. 10 is a table showing temperature ranges of a cooling device according to an inner diameter of a first nipple, a flow rate of fluid, and a flow velocity of fluid; FIG. 11(a) is a diagram showing a temperature range of a cooling device through simulation when an inner diameter of a first nipple is 2.07 mm, a fluid flow rate is 5.6 LPM, and a fluid flow velocity is 27.7 m/s; FIG. 11(b) is a diagram showing a temperature range of a cooling device through simulation when an inner diameter of a first nipple is 2.07 mm, a fluid flow rate is 11 LPM, and a fluid flow velocity is 54.4 m/s; FIG. 12(a) is a diagram showing a temperature range of a cooling device through simulation when an inner diameter of a first nipple is 4.8 mm, a fluid flow rate is 5.6 LPM, and a fluid flow velocity is 5.15 m/s; FIG. 12(b) is a diagram showing a temperature range of a cooling device through simulation when an inner diameter of a first nipple is 4.8 mm, a fluid flow rate is 11 LPM, and a fluid flow velocity is 10.1 m/s; FIG. 13(a) is a diagram showing a temperature range of a cooling device through simulation when an inner diameter of a first nipple is 6 mm, a fluid flow rate is 5.6 LPM, and a fluid flow velocity is 3.3 m/s; and FIG. 13(b) is a diagram showing a temperature range of a cooling device through simulation when an inner diameter of a first nipple is 6 mm, a fluid flow rate is 11 LPM, and a fluid flow velocity is 6.5 m/s.

Referring to FIGS. 10 to 13, a temperature range of the cooling device according to an inner diameter of the first nipple, a flow rate of the fluid, and a flow velocity of the fluid will be described.

First, comparing FIG. 10(a) and FIG. 10(b), when the flow rate of the fluid is approximately doubled under the same condition that the inner diameter of the first nipple is 2.07 mm, the flow velocity of the fluid is approximately doubled. In addition, it can be seen that as the flow rate of the fluid increases, the temperature range of the cooling device decreases from 507.9 ~ 701.1°C to 369.9 ~ 576.9°C.

Likewise, comparing FIGS. 11(a) and 11(b) and comparing FIGS. 12(a) and 12(b), it can be seen that when the inner diameter of the first nipple is the same, the temperature range of the cooling device decreases as the flow rate increases.

Next, comparing FIGS. 10(a), 1 1(a), and 12(a), it can be seen that as the inner diameter of the first nipple increases, the temperature range of the cooling device decreases.

In addition, comparing FIG. 12(a) and FIG. 12(b), as the flow rate of the fluid is doubled, the temperature range of the cooling device decreases from 200.7 ~ 440.8°C to 167.4 ~ 413.2°C, so it can be seen that the decrease in the temperature range of the cooling device is not significant compared to the increase in the flow rate of the fluid.

Accordingly, it can be seen that an increase in the size of the inner diameter of the first nipple has a greater effect on the temperature range of the cooling device than an increase in the flow rate of the fluid.

Meanwhile, when the fluid flow rate of the first nipple increases beyond 11 LPM, energy consumption for supplying the fluid increases.

In addition, when the inner diameter of the first nipple is larger than 6 mm, the flow velocity of the fluid decreases, and thus, there may be a problem that the fluid cannot flow smoothly into the cooling device.

As such, when the inner diameter of the first nipple is approximately 6 mm, the fluid is smoothly supplied to the cooling module and the cooling efficiency of the cooling module is improved.

In addition, when the flow rate of the fluid flowing through the first nipple is approximately 5.6 LPM to 11 LPM, the fluid is smoothly supplied to the cooling module and the cooling efficiency of the cooling module is improved.

Although preferred embodiments according to the present invention have been described above, it will be obvious to those skilled in the art that the present invention can be embodied in other specific forms in addition to the embodiments described above without departing from the spirit or scope thereof. Therefore, the above-described embodiments are to be regarded as illustrative rather than restrictive, and thus, the present invention is not limited to the above description but may be modified within the scope of the appended claims and their equivalents.

## Claims

1. A cooling module for cooling an object to be brazed, the cooling module comprising:
a body part having a contact part in contact with the object to be brazed and cooling the object to be brazed;
a first nipple connected to one side of the body part and having a first supply flow path for receiving fluid from the outside; and
a second nipple connected to the other side of the body part and having a first discharge flow path for discharging the fluid to the outside,
wherein the body part includes:
a second supply flow path formed inside the body part so as to be connected to the first supply flow path;
a second discharge flow path formed inside the body part so as to be connected to the first discharge flow path; and
a connection flow path positioned to be adj acent to the contact part of the body part and connecting the second supply flow path and the second discharge flow path.

2. The cooling module according to claim 1, wherein the connection flow path includes:
a plurality of first connection flow paths formed in parallel and spaced apart from each other; and
a plurality of second connection flow paths disposed between the plurality of first connection flow paths.

3. The cooling module according to claim 2, wherein the lower sides of the plurality of first connection flow paths are formed to become narrower as they go downward.

4. The cooling module according to claim 3, wherein the plurality of second connection flow paths are disposed between the lower sides of the plurality of first connection flow paths,
the upper sides of the plurality of second connection flow paths are formed to be spaced apart from the plurality of first connection flow paths at a certain interval, and
the lower sides of the plurality of second connection flow paths are formed to become farther away from the plurality of first connection flow paths as they go downward.

5. The cooling module according to claim 1, which further includes a moving part that is connected to the body part and moves the body part in a vertical direction.

6. The cooling module according to claim 5, wherein the body part includes:
a first coupling part formed to protrude outward from the body part and provided with a first coupling hole; and
a second coupling part formed to protrude outward from the body part, disposed on a side opposite to the first coupling part and provided with a second coupling hole, and
wherein the moving part includes:
a moving body part having a predetermined length along the vertical direction;
a third coupling part protruding from the moving body part to correspond to the first coupling part and provided with a third coupling hole corresponding to the first coupling hole;
a fourth coupling part protruding from the moving body part to correspond to the second coupling part, disposed on a side opposite to the third coupling part and provided with a fourth coupling hole corresponding to the second coupling hole;
a first bolt inserted through the first coupling hole and the third coupling hole to be bolt-coupled thereto; and
a second bolt inserted through the second coupling hole and the fourth coupling hole to be bolt-coupled thereto.

7. The cooling module according to claim 6, wherein the moving part further includes:
a first elastic part surrounding the outer surface of the first bolt and disposed between the first coupling part and the third coupling part; and
a second elastic part surrounding the outer surface of the second bolt and disposed between the second coupling part and the fourth coupling part.

8. The cooling module according to claim 1, wherein the first nipple has an inner diameter of approximately 6 mm.

9. The cooling module according to claim 8, wherein the flow rate of the fluid flowing through the first nipple is approximately 5.6 LPM to 11 LPM.

10. A brazing apparatus including:
a first fixing part capable of contacting one side of a brazing object and provided with a first electrode;
a second fixing part capable of contacting the other side of the brazing object and provided with a second electrode electrically connected to the first electrode through the brazing object;
a cooling module for cooling the brazing object;
a supply hose connected to one side of the cooling module and supplying fluid to the cooling module; and
a discharge hose connected to the other side of the cooling module and discharging the fluid of the cooling module to the outside,
wherein the cooling module includes:
a body part having a contact part in contact with the brazing object;
a first nipple connected to one side of the body part and provided with a first supply flow path connected to the supply hose to receive the fluid; and
a second nipple connected to the other side of the body part and provided with a first discharge flow path connected to the discharge hose to discharge the fluid to the outside,
wherein the body part includes:
a second supply flow path formed inside the body part so as to be connected to the first supply flow path;
a second discharge flow path formed inside the body part so as to be connected to the first discharge flow path; and
a connection flow path positioned to be adj acent to the contact part of the body part and connecting the second supply flow path and the second discharge flow path.
